# EUROPEAN PATENT APPLICATION

(11) **EP 4 140 792 A1**
(43) Date of publication of application: **01.03.2023**
(21) Application number: 22186628.8
(22) Date of filing: 25.07.2022
(51) Int. Cl.: B60K 11/08, F16H 57/04

(54) **AIR INLET DEVICE FOR TRANSMISSION SYSTEM OF A VEHICLE**

(30) Priority: 30.08.2021 IN 202141039280
(71) Applicant: TVS Motor Company Limited, 600006 Chennai (IN)
(72) Inventor: Muthuraja, Annamalai, 600 006 Chennai (IN); Phadnis, Sachin, 600 006 Chennai (IN)
(74) Representative: Patentanwaltskanzlei Matschnig & Forsthuber OG

(57) **Abstract**

The present invention discloses an air inlet device (100) for a transmission system (202) of a vehicle (200). The air inlet device (100) includes a body member (102) configured to route air into the transmission system (202). The body member (102) includes an inlet opening (104) and an outlet opening (106) connectable to an intake port (202a) defined on a casing (206) of the transmission system (202). The inlet opening (104) is disposed at an elevation from the outlet opening (106). A first bent portion (108) is defined proximal to the outlet opening (106) and extending vertically above an axis A-A' of the intake port (202a) and a second bent portion (110) defined proximal to the inlet opening (104) and extending laterally to the first bent portion (108).

## Description

### FIELD OF THE INVENTION

The present invention relates to air inlet device for a transmission system of a vehicle. More particularly, relates to the air inlet device that orients away from an engine of a continuously varying transmission (CVT) system of the vehicle.

### BACKGROUND OF THE INVENTION

Vehicles, such as a scooter-type vehicle, include a transmission system having an engine for producing a motive force. The motive force is transmitted to wheels of the vehicle suitably, for vehicle movement. Typically, the motive force is transmitted to the wheels via a V-belt continuously variable transmission (CVT) system. During such a transmission, heat is generated due to friction between the belt as well as a pulley. The heat generated is required to be removed for durability and effective performance of the CVT system.

In order to overcome the aforementioned limitation, an air inlet device is provided for the CVT system. The air inlet device is configured to circulate ambient air within the CVT system for dissipating the heat generated during transmission of motive force. However, in conventional vehicles, the air inlet device is typically oriented towards an engine cylinder head region, particularly in a horizontally disposed engine. In such air inlet devices, the air drawn reaches a very high temperature, for example 55 degrees. Such high temperature air when drawn into the CVT has potential to damage the durability of the belt drive, which is made of rubber material.

To overcome the aforementioned problems in air inlet device and to retain durability of the belt drive, one option is to enhance the heat resistant characteristics of the belt drive. However, such a change increases the overall cost of the CVT system. Also, any modification in characteristics of the belt drive also impacts the other parameters of the belt drive such as weight, rigidity and speed of rotation.

Alternatively, in recent past the air inlet device is oriented away from the engine cylinder head, i.e., facing towards the vehicle side in order to receive the atmospheric air directly. However, such design of air inlet devices suffers from the problem of water droplet entry and entry of coarser dust particles, as the chances of water, mud and coarser dust entering the cover variator tube inlet when it is facing towards the atmospheric side is high.

In view of the above, there is a need for an air inlet device for a transmission system of a vehicle, which addresses one or more limitations stated above.

### SUMMARY OF THE INVENTION

In one aspect, an air inlet device for a transmission system of a vehicle is disclosed. The air inlet device includes a body member configured to route air into the transmission system. The body member includes an inlet opening and an outlet opening connectable to an intake port defined on a casing of the transmission system. The inlet opening is disposed at an elevation from the outlet opening. A first bent portion is defined proximal to the outlet opening and extending vertically above an axis A-A' of the intake port and a second bent portion defined proximal to the inlet opening and extending laterally to the first bent portion.

In an embodiment, the second bent portion is adapted to orient the inlet opening away from an internal combustion engine of the vehicle.

In an embodiment, a plurality of louvered structures are mounted onto the inlet opening.

In an embodiment, a plurality of ribs are defined on the first bent portion, wherein the plurality of ribs are adapted to enhance structural rigidity of the first bent portion.

In an embodiment, a flange structure is defined on the outlet opening. The flange structure is adapted to facilitate engagement of the outlet opening with the intake port of the casing.

In an embodiment, the first bent portion is made of a rubber material.

In an embodiment, the second bent portion is made of a plastic material.

In an embodiment, the vehicle is a saddle-type vehicle.

In an embodiment, the casing is a cover variator of the transmission system.

In another aspect, a saddle-type vehicle is disclosed. The vehicle includes a transmission system having an internal combustion engine disposed in a transmission casing. The transmission casing has the cover variator defined with an intake port. The air inlet device for the transmission system is also provided. The air inlet device includes the body member configured to route air into the transmission system. The body member includes the inlet opening and the outlet opening connectable to the intake port defined on the casing. The inlet opening is disposed at elevation from the outlet opening. The first bent portion is defined proximal to the outlet opening and extending vertically above the axis A-A' of the intake port and the second bent portion defined proximal to the inlet opening and extending laterally to the first bent portion.

In an embodiment, the second bent portion is adapted to orient the inlet opening away from an internal combustion engine of the vehicle.

### BRIEF DESCRIPTION OF THE DRAWINGS

Reference will be made to embodiments of the invention, examples of which may be illustrated in accompanying figures. These figures are intended to be illustrative, not limiting. Although the invention is generally described in context of these embodiments, it should be understood that it is not intended to limit the scope of the invention to these particular embodiments.
Figure 1 is a perspective view of a saddle-type vehicle, in accordance with an embodiment of the present disclosure.
Figure 2 is a schematic view of a transmission system of the vehicle, in accordance with an embodiment of the present disclosure.
Figure 3 is a schematic view of a cover variator of the transmission system, in accordance with an embodiment of the present disclosure.
Figure 4 is a perspective view of the cover variator, in accordance with an embodiment of the present disclosure.
Figure 5 is a perspective view of an air inlet device, in accordance with an embodiment of the present disclosure.
Figure 6 is an exploded view of the air inlet device, in accordance with an embodiment of the present disclosure.
Figure 7 is a sectional view of the air inlet device connected to the cover variator, in accordance with an embodiment of the present disclosure.
Figure 8 is a sectional view of the air inlet device, in accordance with an embodiment of the present disclosure.

### DETAILED DESCRIPTION OF THE INVENTION

Various features and embodiments of the present invention here will be discernible from the following further description thereof, set out hereunder.

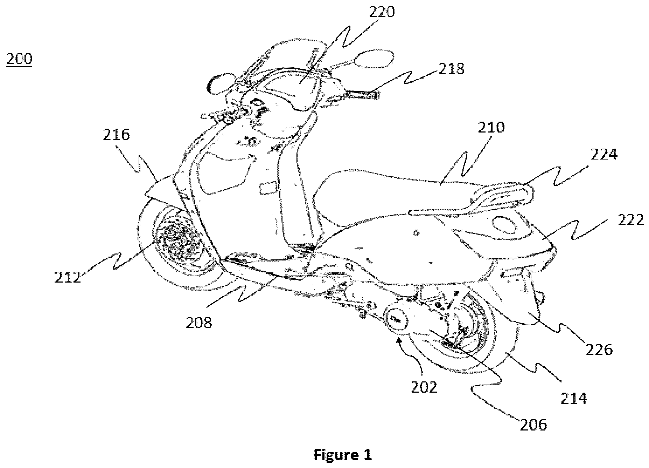

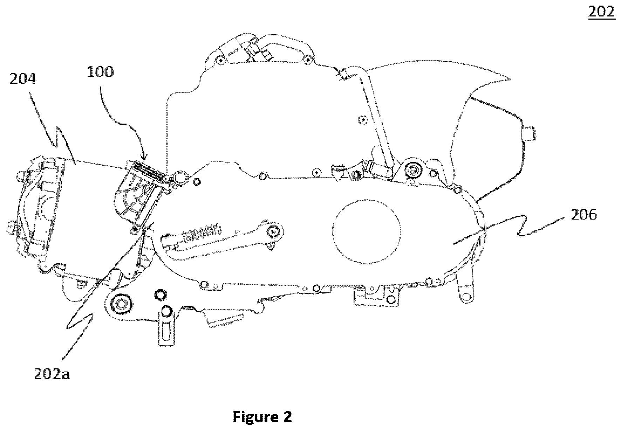

Figure 1 illustrates a schematic view of a saddle-type vehicle 200, in accordance with an embodiment of the present invention. As an example, the saddle-type vehicle 200 is a scooter type vehicle. The vehicle 200 has a transmission system 202 (shown in Figure 2) including an internal combustion engine 204 that is disposed behind a floorboard 208 and below a seat assembly 210 and/or a storage bin (not shown). The vehicle 200 has a front wheel 212, a rear wheel 214 and a frame member (not shown).

A head pipe (not shown) connects to the frame member. The head pipe supports a steering shaft (not shown) and a front suspension (not shown) attached to the steering shaft through a lower bracket (not shown). The front suspension supports the front wheel 212. The upper portion of the front wheel 212 is covered by a front fender 216 mounted to the front suspension. In an embodiment, the front fender 216 is movable along with the front wheel 212, during travel over undulations on a road surface. A handlebar 218 is fixed to upper bracket (not shown) and can rotate about the steering shaft for turning the vehicle 200. A headlight (not shown) and an instrument cluster 220 is arranged on an upper portion of the head pipe.

Further, a rear suspension (not shown) is provided to the rear wheel 214 for dampening the vibrations induced during travel of the vehicle 200 over undulations on the road surface. A taillight unit 222 is disposed at the end of the vehicle 200 and at the rear of the seat assembly 210. A grab rail 224 is also provided for facilitating the grip and/or balance to a rider on the vehicle 200 during movement. The rear wheel 218 is arranged below the seat assembly 214 and adapted to receive the motive force from the prime mover. A suitable transmission assembly is provided for transferring the drive force from the prime mover onto the rear wheel 214 for driving the vehicle 200. In an embodiment, the driving force of the internal combustion engine 204 is transmitted through a chain drive [not shown]. A rear fender 226 is disposed above the rear wheel 214. An exhaust pipe (not shown) is also provided for the Internal combustion engine 204, that extends therefrom towards the rear end of the vehicle 200.

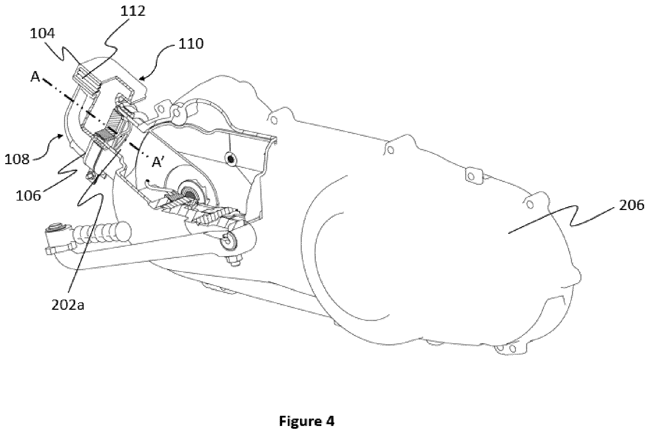

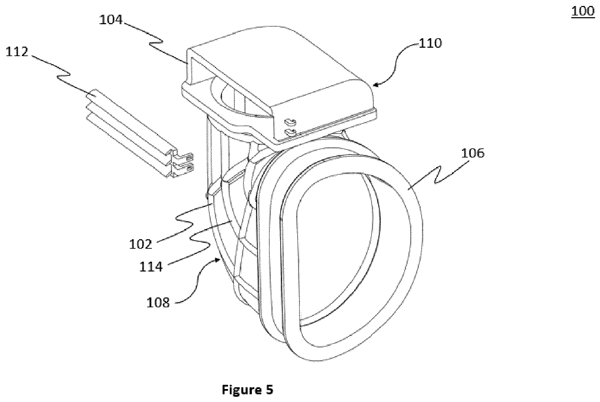

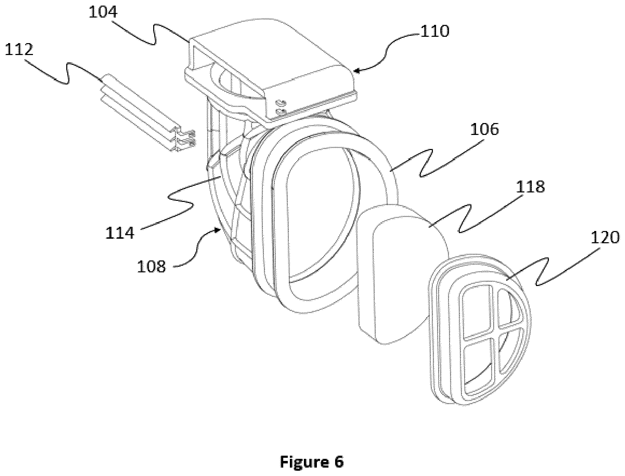

Further, referring to Figures 2-4 in conjunction with Figure 1, the transmission system 202 includes a casing 206 extending from a crankcase (not shown). In an embodiment, the casing 206 is a cover variator of the transmission system 202 that includes a kick-starter (not shown). The casing 206 includes an intake port 202a to which an air inlet device 100 (as shown in Figures 5 and 6) is coupled. In the present embodiment, the intake port 202a is located adjacently to the internal combustion engine 204 and is oriented towards the side of the vehicle 200. The air inlet device 100 is adapted to inlet air into the transmission system 200 via the intake port 202a for dissipating heat generated therein. The description pertaining to the air inlet device 100 is provided with reference to Figures 5-8 in the present disclosure.

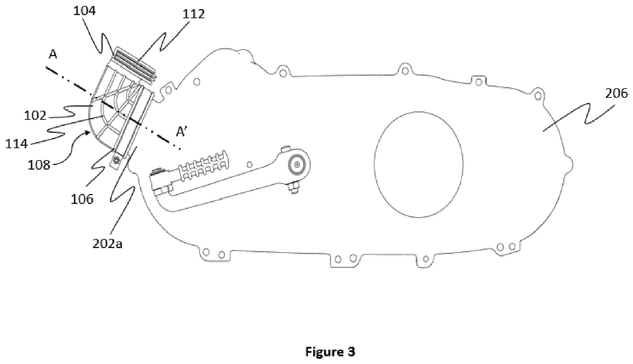

Figure 5 illustrates the air inlet device 100 in accordance with an exemplary embodiment of the present disclosure. The air inlet device 100 is adapted to be oriented away from the internal combustion engine 204, while also maintaining an elevation (for *e.g*. as shown in Figures 3, 4 and 7) with the intake port 202a, thereby preventing entry of water or dust particles into the transmission system 202.

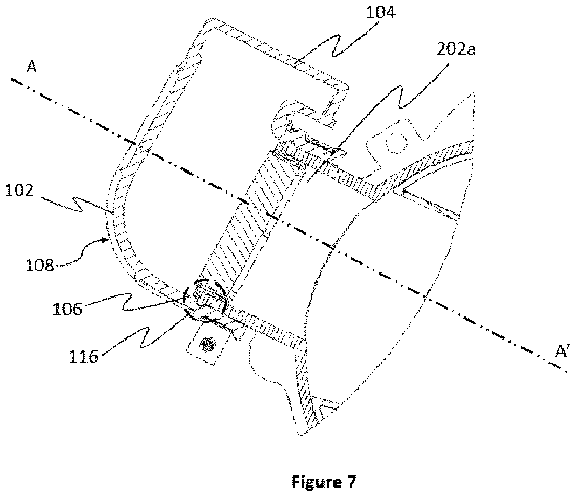

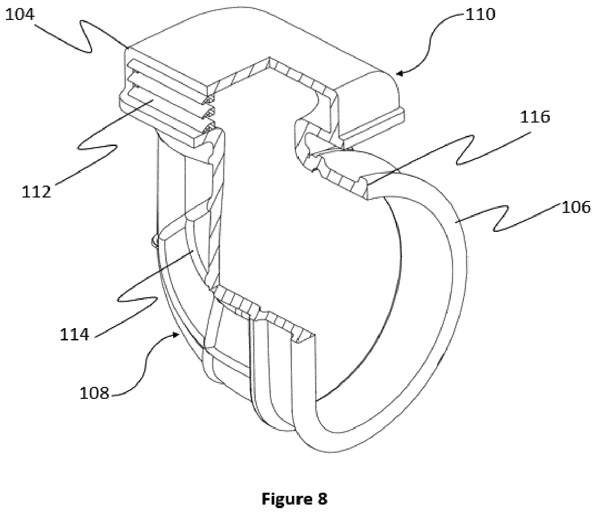

The air inlet device 100 includes a body member 102 configured to route air into the transmission system 202. The body member 102 includes an inlet opening 104 and an outlet opening 106 connectable to the intake port 202a defined on the casing 206 of the transmission system 202. In an embodiment, the outlet opening 106 is connected to the intake portion 202a via conventional connecting means such as snap-fitting. In the present embodiment, a flange structure 116 (for *e.g*. as shown in Figures 7 and 8) is defined on the outlet opening 106. The flange structure 116 is adapted to facilitate engagement of the outlet opening 106 with the intake port 202a of the casing 106. In an embodiment, the flange structure 116 is adapted to engage with a lip of the intake port 202a for engagement.

Further, the body member 102 extends such that the inlet opening 104 is disposed or positioned at an elevation from the outlet opening 106. In an embodiment, the dimension and configuration of the inlet opening 104 and the outlet opening 106 are identical to one another. In the present embodiment, the dimensions of the inlet opening 104 and the outlet opening 106 are corresponding to the dimensions of the intake portion 202a, for ensuring minimal obstruction to air flow therein.

Also, the body member 102 includes a first bent portion 108 defined proximal to the outlet opening 106. The first bent portion 108 extends the body member 102 vertically above an axis A-A' (for e.g. as shown in Figure 7) of the intake port 202a. The vertical extension of the body member 102 positions the inlet opening 104 laterally to the outlet opening 108, for facilitating air flow from sides of the vehicle 200. Additionally, the vertical extension of the body member 102 also enables the inlet opening 104 to be placed at an elevation than the outlet opening 106. In an embodiment, the first bent portion 108 is made of rubber material for enabling flexibility of the air inlet device 100 during mounting on the intake port 202a.

In an embodiment, the axis A-A' extends along the plane of the intake port 202a (for e.g. as shown in Figure 7). As such, the axis A-A' extends suitably as per design feasibility and positional requirements of the air inlet device 100.

The body member 102 also includes a second bent portion 110 defined proximal to the inlet opening 104. The second bent portion 110 is adapted to extend laterally to the first bent portion 108, thereby positioning the inlet opening 104 laterally to the outlet opening 106. Also, the lateral extension is selected such that, the inlet opening 104 is oriented away from the internal combustion engine 204. Such a construction ensures that atmospheric air directly enters the body member 102, without traversing over the internal combustion engine 204. In an embodiment, the second bent portion 110 is made of plastic material, so that the inlet opening 104 is capable of withstanding the loads acting thereon during air flow into the body member 102.

In an embodiment, the configuration and the angle of extension of the first bent portion 108 corresponds to location of the internal combustion engine 204 and/or the configuration of the transmission system 202.

In an embodiment, the configuration and the angle of extension of the second bent portion 110 corresponds to location of the internal combustion engine 204 and/or the configuration of the transmission system 202.

In an embodiment, the inlet opening 104 extends laterally from the second bent portion 108 such that, the inlet opening 104 is located adjacent to a side panel (not shown) of the vehicle 200. Such a construction ensures that air directly enters the body member 102 via the inlet opening 104 for cooling the transmission system 202.

Referring to Figure 6, the inlet opening 104 is provided with a plurality of louvered structures 112. The plurality of louvered structures 112 are adapted to direct air into the body member 102, while also preventing dust and water particles therein. In an embodiment, the plurality of louvered structure 112 are a plate like structures which are mounted angularly on the inlet opening 104. In an embodiment, the plurality of louvered structures 112 are made of plastic material.

Further, the air inlet device 100 includes a filter member 118 disposed in the outlet opening 106. The filter member 118 is adapted to prevent entry of water or dust particles into the transmission system 202 during air flow. In an embodiment, the filter member 118 is a foam filter. For disposing the filter member 118, a filter holder 120 is also provided at the outlet opening 106. The filter holder 120 supports the filter member 118 in the air inlet device 100.

Further, the air inlet device 100 includes a plurality of ribs 114 defined on the first bent portion 108 and extends upto the second bent portion 110. The plurality of ribs 114 are adapted to enhance structural rigidity of the first bent portion 108 and/or the air inlet device 100 during use.

Advantageously, the present invention provides the air inlet device 100 which is positioned away from the engine 204 while also located at an elevation from the outlet opening 108, due to the first bent portion 108 and the second bent portion 110. Such a construction of the inlet device 100 ensures that fresh air enters the transmission system 202 for cooling, thereby enhancing durability and maintain consistent performance of the transmission system 202. Also, due to the first bent portion 108 and the second bent portion 110 the air inlet device 100 is easily disposed in the transmission system 202, thus mitigating the requirement of additional space and mounting requirements.

While the present invention has been described with respect to certain embodiments, it will be apparent to those skilled in the art that various changes and modification may be made without departing from the scope of the invention as defined in the following claims.

## Claims

1. An air inlet device (100) for a transmission system (202) of a vehicle (200), the air inlet device (100) comprising:
a body member (102) configured to route air into the transmission system (202), the body member (102) comprising an inlet opening (104);
an outlet opening (106) connectable to an intake port (202a) defined on a casing (206) of the transmission system (202), wherein the inlet opening (104) is disposed at an elevation from the outlet opening (106);
a first bent portion (108) defined proximal to the outlet opening (106) and extending vertically above an axis A-A' of the intake port (202a); and
a second bent portion (110) defined proximal to the inlet opening (104) and extending laterally to the first bent portion (108).

2. The air inlet device (100) as claimed in claim 1, wherein the second bent portion (110) is adapted to orient the inlet opening (104) away from an internal combustion engine (204) of the vehicle (200).

3. The air inlet device (100) as claimed in claim 1 comprises a plurality of louvered structures (112) mounted onto the inlet opening (104).

4. The air inlet device (100) as claimed in claim 1 comprises a plurality of ribs (114) defined on the first bent portion (108), wherein the plurality of ribs (114) are adapted to enhance structural rigidity of the first bent portion (108).

5. The air inlet device (100) as claimed in claim 1 comprises a flange structure (116) defined on the outlet opening (106), the flange structure (116) adapted to facilitate engagement of the outlet opening (106) with the intake port (202a) of the casing (106).

6. The air inlet device (100) as claimed in claim 1, wherein the first bent portion (108) is made of a rubber material.

7. The air inlet device (100) as claimed in claim 1, wherein the second bent portion (110) is made of a plastic material.

8. The air inlet device (100) as claimed in claim 1, wherein the vehicle (200) is a saddle-type vehicle.

9. The air inlet device (100) as claimed in claim 1, wherein the casing (206) is a cover variator of the transmission system (202).

10. A saddle-type vehicle (200), comprising:
a transmission system (202) having an internal combustion engine (204) disposed in a transmission casing, the transmission casing having a cover variator (206) defined with an intake port (202a); and
an air inlet device (100) for the transmission system (202), the air inlet device (100) comprising:
a body member (102) configured to route air into the transmission system (202), the body member (102) comprising an inlet opening (104);
an outlet opening (106) connectable to the intake port (202a), wherein the inlet opening (104) is disposed at an elevation from the outlet opening (106);
a first bent portion (108) defined proximal to the outlet opening (106) and extending vertically above an axis A-A' of the intake port (202a); and
a second bent portion (110) defined proximal to the inlet opening (104) and extending laterally to the first bent portion (108).

11. The saddle-type vehicle (200) as claimed in claim 10, wherein the second bent portion (110) is adapted to orient the inlet opening (104) away from an internal combustion engine (204) of the vehicle (200).

12. The saddle-type vehicle (200) as claimed in claim 10 comprises a plurality of louvered structures (112) mounted onto the inlet opening (104).

13. The saddle-type vehicle (200) as claimed in claim 10 comprises a plurality of ribs (114) defined on the first bent portion (108), wherein the plurality of ribs (114) are adapted to enhance structural rigidity of the first bent portion (108).

14. The saddle-type vehicle (200) as claimed in claim 10 comprises a flange structure (116) defined on the outlet opening (106), the flange structure (116) adapted to facilitate engagement of the outlet opening (106) with the intake port (202a) of the casing (106).
